# EUROPEAN PATENT SPECIFICATION

(11) **EP 0 719 680 B1**
(45) Date of publication and mention of the grant of the patent: **21.04.1999**
(21) Application number: 95308470.4
(22) Date of filing: 27.11.1995
(51) Int. Cl.: B60R 21/32

(54) **Key activated air bag disabling system**
Schlüsselbetätigtes Luftsack-Ausschaltungssystem.
Système à clef pour la désactivation d'un coussin d'air

(30) Priority: 27.12.1994 US 364890
(43) Date of publication of application: 03.07.1996
(73) Proprietor: Ford Motor Company, Dearborn, MI 48126 (US)
(72) Inventor: Tekelly, Joseph, Troy, Michigan 48098 (US); Niesluchowski, Matt, Troy, Michigan 48083 (US); Smith, Mary, Canton, Michigan 48187 (US); Andrus, Michael, Farmington Hills, Michigan 48336 (US)
(74) Representative: Messulam, Alec Moses

(56) References cited:
- DE-A- 4 237 142
- US-A- 3 767 002
- US-A- 5 324 074

## Description

### Field of the invention

The present invention relates generally to automotive vehicle occupant restraint systems, particularly air bags. More specifically, the invention relates to mechanisms for selectively disabling such systems.

### Description of the related art

Since inflatable occupant restraint systems or air bag systems have come into widespread use in the automotive industry, it has been observed that there are certain instances in which it may be desirable to disable operation of the air bag system in a vehicle during the period in which the vehicle is in use. One such instance is when a vehicle has air bags for both the driver and passenger positions and a rear facing infant seat is placed in the passenger position and is not properly positioned for use with the air bag. Since practically all air bag systems currently in use are activated by transmitting an electrical signal powered by the vehicle electrical system to an igniting device in the air bag system, it has been suggested to provide switching to effect disabling of the air bag system on a selective basis. US-A 5 324 074; 5 234 228; and 5 161 820 are exemplary of such approaches. For example, US-A 5 324 074, disclosing the features of the preamble of claim 1, comprises a push-on-push-off type switch electrically connected to the source of electrical power and to the air bag and selectively movable between a first position interconnecting said source of electrical power and the air bag is provided to enable activation of the air bag and a second position preventing said activation during the period in which the vehicle is in use.

Certain disadvantages, however, are noted in the prior art disabling systems. These disadvantages arise from the appropriate desire of the designer of the occupant restraint system to ensure that because of the inherent normal benefit of having the air bag system operating, the disabling takes place only when intended and only under the control of the operator of the vehicle. It is also desired that the reliability and efficacy of this disabling device be monitored during a vehicle operating event which might normally give rise to operation of the air bag disabled by the disabling system. None of the prior art devices provide such advantages.

### Summary of the invention

With a view to mitigating the disadvantages of the prior art, the present invention provides an air bag disabling system for an automotive vehicle as hereinafter set forth in Claim 1 of the appended claims.

In the preferred embodiment of the invention, the key cylinder is operable only by a key having certain bits in common with the ignition key of the vehicle.

### Brief description of the drawings

The invention will now be described further, by way of example, with reference to the accompanying drawings, in which:
Figure 1 is an elevation view of an automotive instrument panel illustrating installation of an air bag disabling system according to the present invention;
Figure 2 is a view similar to Figure 1 illustrating an alternative embodiment for installation of the air bag disabling system;
Figure 3 is an exploded view of the key and key cylinder of the invention air bag disabling system;
Figure 4 is an enlarged elevation view of the exterior surfaces of the air bag disabling system presented to the outside of the instrument panel; and
Figure 5 is an electrical schematic of the air bag disabling system according to the present invention.

### Description of the preferred embodiment

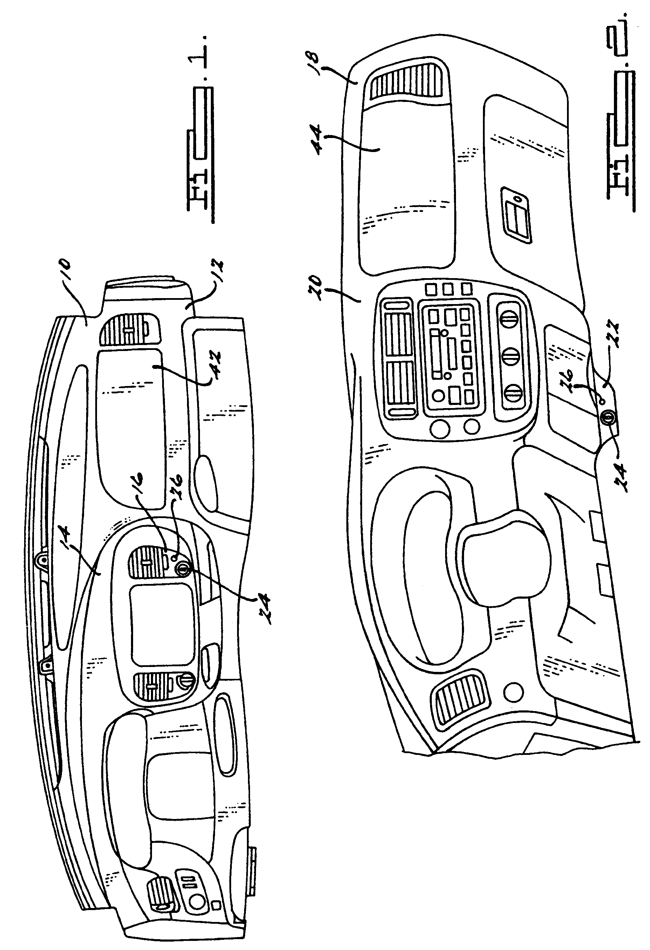

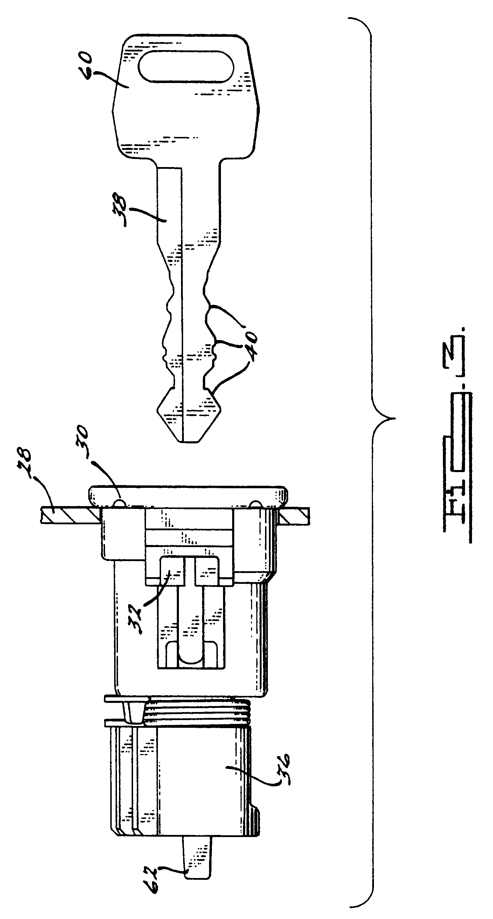

Turning now to Figures 1 and 2, an instrument panel 10 of an automotive vehicle is illustrated as including a main body portion 12 having a centre section 14 in which is mounted an air bag disabling system 16. The embodiments of Figure 1 and 2 differ in that the instrument panel 10 of the Figure 1 embodiment includes the air bag disabling system module 16 mounted directly into the main body portion 12. On the other hand, the Figure 2 embodiment illustrates an instrument panel 18 having a main body portion 20 and an air bag disabling system module 22 is positioned to suspend below the main body portion 20.

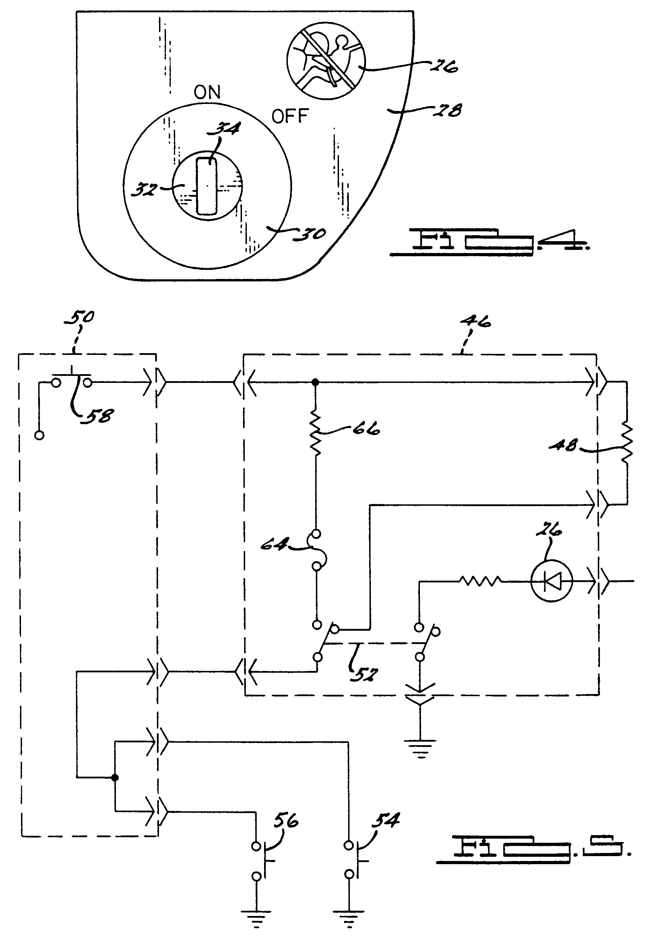

Common to both the modules 16 and 22 are a key cylinder 24 and a signal light 26 whose arrangement can best be seen in Figure 3. In each of the modules 16, 22, a housing 28 is inserted into and is mounted in the instrument panel main body portion 12, 20. As can best be seen in Figure 3, the key cylinder presents a bezel portion 30 outwardly of the instrument panel 10, 12 and the bezel portion 30 is fixedly mounted against the housing 28. As may best be seen in Figure 4, a key cylinder assembly 32 is rotatably mounted within the bezel 30, presenting a key slot 34 externally of the instrument panel 10, 12. The key cylinder 32 and bezel 30 may be of substantially conventional designs, which will typically include an actuating portion 36 rotatably movable upon insertion of a key 38 into the key slot 34 and rotation thereof in known lock and key manner. The key 38 is preferably of conventional design having a plurality of bits 40 for engagement with actuating pins or other similar mechanisms within the key cylinder 32 to effect rotation of the actuating portion 36. It is, of course, well known to form such keys and to use such keys for ignition keys in automotive vehicles. It is preferred in the disabling system module of the present invention that the lock cylinder 32 be configured to operatively engage with certain of the bits 40 which are common to all keys of a particular automotive vehicle manufacturer. Alternatively, the key cylinder 32 can be configured in a known manner to accept a key 38 only identical in configuration to that required for the ignition key of the vehicle in which the disabling system module 16, 22 is installed.

The key 38, upon insertion into the key slot 34, permits movement between the first position labelled "ON" in Figure 3 and the second position labelled "OFF", displaced therefrom in a clockwise direction. The ON position corresponds to a position in which an air bag system may be activated. The OFF position corresponds to a position in which the air bag system may not be activated. It will be noted that the key slot 34 aligns with the signal light 26 when in the OFF position, and as will be later described, the signal light is lit when it is in a position to give an indication that the air bag system is disabled.

It is contemplated that the disabling system modules 16, 22 are best utilised in automotive vehicles that have air bag systems installed in at least two seating positions in the front seat of a vehicle in juxtaposition with an instrument panel such as the instrument panels 10, 18. Returning to Figure 1, it is to be understood that in a left-hand drive vehicle air bags would be installed in the vehicle steering wheel (not shown) on the left side of the instrument panel 10, 18, and in the passenger positions 42, 44 on the right side of the instrument panels 10, 18, respectively. When the passenger seat juxtaposed the air bags 42, 44 is unoccupied or is occupied by persons or things for which operation of the air bag system is not desired, the disabling systems 16, 22 may be actuated by turning the key 40 to the OFF position shown. One exemplary use is the disabling of the air bag system in situations in which an infant in a rear facing seat is placed in the passenger position. For some configurations of seat and air bag, it may be undesirable to permit air bag activation during emergency situations.

The key cylinder 32 is operatively connected in a mechanical fashion to a circuit indicated at 46 in Figure 5 for electrically interconnecting the passenger air bag 42, 44 indicated diagrammatically as a resistive load 48 and a source of electrical power 50 in the vehicle. During normal operation of a vehicle, a switch 52, in the position shown in Figure 5, operates to conduct power from the vehicle electrical power source 50 to the air bag 48 when either of a pair of primary sensors 54, 56 and an auxiliary safing sensor 58 are closed. The sensors 54, 56, 58 are acceleration sensors mounted in the vehicle to sense decelerations representative of collision effected decelerations above a certain magnitude.

It is also known to apply low power to the air bag 48 to test the integrity of the air bag systems 42, 44. The circuit diagnosis effected during such operation makes use of the resistance of certain of air bag electrical components, as represented diagrammatically at 48.

Upon rotating the key 38 from the ON position to the OFF position, the key 38, which includes a flat sided handle portion 60, aligns to point at the signal lamp 26. The actuator portion 36 of the key cylinder 32 includes an operating tab 62 which interacts with the switch 52 to move it from the position shown in Figure 5 to its alternative position in which electrical power from the vehicle electrical system 50 is supplied to the signal lamp 26 and through a fuse 64 and a resistive test load 66 arranged in parallel with the air bag 48 and connection is broken between the power source 50 and air bag 48. The resistive test load 66 simulates the air bag 48 and permits continuing operation of diagnostics at low power. Upon sensing through operation of the sensors 54, 56, 58 that a collision condition has occurred, however, higher power is delivered through the circuit in the OFF position. Advantageously, the fuse 64 is sized to disconnect upon application of power at the level that the air bag system utilised to activate the air bag 48. The controlling of the two power levels as a function of the diagnostic and firing circuit of the automotive vehicle is not part of the present invention. It should be understood, however, that the diagnostic operation typically takes place under influence of a current of about 150 mA while the firing operation is effected through passing a current of approximately 5 amps in the preferred air bag system. As a check on the reliability of the disabling system module 16, 22, the fuse 64 acts as a memory so that if a collision has occurred which effects closure of sensors 54 or 56 and 58, the fuse will operate to open the circuit, and it can be readily detected that the switch 52 was in the OFF position during the event.

## Claims

1. An air bag disabling system for an automotive vehicle having an air bag (42,44) mounted in an instrument panel (10) in the vehicle and activated to inflate a cushioning bag in response to a condition sensed by an acceleration sensor (54,56) operatively carried with the vehicle, the disabling system comprising:
a source of electrical power (50) mounted in the vehicle;
a switch (52) electrically connected to said source of electrical power (50) and to the air bag (42,44) and selectively movable between a first position interconnecting said source of electrical power (50) and the air bag (42,44) to enable activation of the air bag and a second position preventing said activation during the period in which the vehicle is in use;
characterised in that said system includes
a key cylinder (32) operated by an ignition key (38) having a plurality of bits, the key cylinder (32) being rotatably mounted in the instrument panel (10) and operatively connected to said switch (52) to effect movement of said switch between said first and second positions.

2. A disabling system as claimed in claim 1, wherein said key cylinder (32) is operable by the vehicle ignition key.

3. A disabling system as claimed in claim 1 or 2, further comprising a key (38) having a plurality of bits (40), at least certain of said bits (40) being identical with certain bits of the vehicle ignition key.

4. A disabling system as claimed in any preceding claim, wherein the instrument panel (10) defines a main body portion (12) and said key cylinder is mounted in said main body portion.

5. A disabling system as claimed in any of Claims 1 to 3, wherein the instrument panel defines a main body portion and said key cylinder is mounted below said main body portion.

6. A disabling system as claimed in any preceding claim, further comprising a signal light (26) operatively connected to said switch (52) to effect visual indication of the position of said switch (52).

7. A disabling system as claimed in claim 6, wherein the signal position (26) is positioned adjacent the key cylinder (32).

8. A disabling system as claimed in claim 7, wherein said key (38) for the lock cylinder (32) has a handle portion (60) having substantially flat sides and said lock cylinder (32) is located with respect to said signal light (26) such that the flat sides of said handle portion (60) point substantially at said light (26) when said switch (52) is in said second position.

## Patentansprüche

1. Ein Luftkissen-Unterbindungssystem für ein Kraftfahrzeug mit einem Luftkissen (42, 44), das in ein Armaturenbrett (10) im Fahrzeug eingebaut ist und betätigt wird, um ein Luftkissen zur Dämpfung aufzublasen, als Ansprechen auf eine Situation, die von einem Beschleunigungsaufnehmer (54, 56) detektiert wird, der im Betrieb mit dem Fahrzeug befördert wird, wobei das Unterbindungssystem enthält:
eine elektrische Stromquelle (50), die im Fahrzeug angebracht ist;
einen Schalter (52), der elektrisch an die besagte elektrische Stromquelle (50) und an das Luftkissen (42, 44) angeschlossen ist und wahlweise zwischen einer ersten Stellung bewegt werden kann, wobei er die besagte elektrische Stromquelle (50) und das Luftkissen (42, 44) miteinander verbindet, um die Betätigung des Luftkissens zu ermöglichen und einer zweiten Stellung, welche die besagte Betätigung während des Zeitraums in dem das Fahrzeug fährt, verhindert;
dadurch gekennzeichnet dass das besagte System enthält
einen Schlüsselzylinder (32), der durch den Zündschlüssel (38) betätigt wird, der eine Vielzahl von Schlüsselbartteilen hat, wobei der Schlüsselzylinder (32) rotierbar im Armaturenbrett (10) montiert ist und im Betrieb mit dem besagten Schalter (52) verbunden ist, um die Bewegung des besagten Schalters zwischen der besagten ersten und der zweiten Stellung auszuführen.

2. Ein Unterbindungssystem nach Anspruch 1, in dem der besagte Schlüsselzylinder (32) durch den Zündschlüssel des Fahrzeugs betätigt werden kann

3. Ein Unterbindungssystem nach Anspruch 1 oder 2, das ausserdem einen Schlüssel (38) enthält, der eine Vielzahl von Schlüsselbartteilen (40) hat, wobei mindestens einige der besagten Schlüsselbartteile (40) identisch mit gewissen Schlüsselbartteilen des Zündschlüssels des Fahrzeugs sind.

4. Ein Unterbindungssystem nach irgendeinem vorhergehendem Anspruch, in dem das Armaturenbrett (10) einen Hauptkörperabschnitt (12) begrenzt und der besagte Schlüsselzylinder im besagten Hauptkörperabschnitt montiert ist.

5. Ein Unterbindungssystem nach irgendeinem der vorhergehenden Ansprüche 1 bis 3, in dem das Armaturenbrett einen Hauptkörperabschnitt begrenzt und der besagte Schlüsselzylinder unter dem besagten Hauptkörperabschnitt montiert ist.

6. Ein Unterbindungssystem nach irgendeinem vorhergehendem Anspruch, das ausserdem ein Signallicht (26) enthält, das im Betrieb an den besagten Schalter (52) angeschlossen ist, um die visuelle Angabe der Stellung des besagten Schalters (52) anzugeben.

7. Ein Unterbindungssystem nach Anspruch 6, in dem die Stellung des Signallichts (26) nahe des Schlüsselzylinders (32) ist.

8. Ein Unterbindungssystem nach Anspruch 7, in dem der besagte Schlüssel (38) für den Schlüsselzylinder (32) einen Griffabschnitt (60) hat, der im wesentlichen flache Seiten hat und der besagte Schlüsselzylinder (32) ist im Verhältnis zum besagten Signallicht (26) derartig angebracht, dass die flachen Seiten des besagten Griffabschnitts (60) im wesentlichen zum besagten Signallicht (26) orientiert sind, wenn sich der besagte Schalter (52) in der besagten zweiten Stellung befindet.

## Revendications

1. Système de désactivation de coussin gonflable destiné à un véhicule automobile comportant un coussin gonflable (42, 44) monté dans le tableau de bord (10) du véhicule et activé de façon à gonfler un coussin de sécurité en réponse à une condition détectée par un capteur d'accélération (54, 56) supporté de façon fonctionnelle à l'intérieur du véhicule, le système de désactivation comprenant :
une source de courant électrique (50) montée dans le véhicule,
un commutateur (52) relié électriquement à ladite source de courant électrique (50) et au coussin gonflable (42, 44) et pouvant être déplacé de façon sélective entre une première position interconnectant ladite source de courant électrique (50) et le coussin gonflable (42, 44) afin de permettre l'activation du coussin gonflable, et une seconde position empêchant ladite activation pendant une période durant laquelle le véhicule est en utilisation,
caractérisé en ce que ledit système comprend
un barillet de clé (32) commandé par une clé de contact (38) comportant une pluralité de découpes, le barillet de clé (32) étant monté avec possibilité de rotation dans le tableau de bord (10) et étant relié fonctionnellement audit commutateur (52) afin de provoquer le déplacement dudit commutateur entre lesdites première et seconde positions.

2. Système de désactivation selon la revendication 1, dans lequel ledit barillet de clé (32) peut être manoeuvré à l'aide de la clé de contact du véhicule.

3. Système de désactivation selon la revendication 1 ou la revendication 2, comprenant en outre une clé (38) comportant une pluralité de découpes (40), au moins certaines desdites découpes (40) étant identiques à certaines découpes ou parties de panneton de la clé de contact du véhicule.

4. Système de désactivation selon l'une quelconque des revendications précédentes, dans lequel le tableau de bord (10) définit une partie de corps principal (12) et ledit barillet de clé est monté dans ladite partie de corps principal.

5. Système de désactivation selon l'une quelconque des revendications 1 à 3, dans lequel le tableau de bord définit une partie de corps principal, et ledit barillet de clé est monté au-dessous de ladite partie de corps principal.

6. Système de désactivation selon l'une quelconque des revendications précédentes, comprenant en outre un voyant lumineux (26) relié fonctionnellement audit commutateur (52) afin de donner une indication visuelle de la position dudit commutateur (52).

7. Système de désactivation selon la revendication 6, dans lequel le voyant lumineux (26) est positionné à proximité du barillet de clé (32).

8. Système de désactivation selon la revendication 7, dans lequel ladite clé (38) destinée au barillet de serrure (32) comporte une partie de saisie (60) présentant des faces pratiquement plates, et ledit barillet de serrure (32) est positionné par rapport audit voyant lumineux (26) de façon que les faces plates de ladite partie de saisie (60) soient orientées pratiquement vers ledit voyant lumineux (26) lorsque ledit commutateur (52) se trouve dans ladite seconde position.
